# EUROPÄISCHE PATENTSCHRIFT

(11) **EP 1 333 078 B1**
(45) Veröffentlichungstag und Bekanntmachung des Hinweises auf die Patenterteilung: **03.08.2005**
(21) Anmeldenummer: 03000304.0
(22) Anmeldetag: 09.01.2003
(51) Int. Cl.: C09J 7/02

(54) **Verpackungs-Klebeband**
Adhesive packaging tape
Ruban adhésif d'emballage

(30) Priorität: 31.01.2002 DE 10203885
(43) Veröffentlichungstag der Anmeldung: 06.08.2003
(73) Patentinhaber: tesa AG, 20253 Hamburg (DE)
(72) Erfinder: David, Wolfgang, 21149 Hamburg (DE); Röber, Stefan, Dr., 22453 Hamburg (DE)

(56) Entgegenhaltungen:
- DE-A- 3 207 236
- US-A- 3 617 362

## Beschreibung

Gegenstand der Erfindung sind lösemittelfreie Klebebänder mit einer Folie auf Basis von Polyolefinen und einer Klebemasse auf Basis von Acrylatdispersion und ihre Verwendung als Verpackungs-Klebeband.

Lösemittelhaltige Klebebänder mit einer Folie auf Basis von Polyolefinen, insbesondere auf Basis von biaxial gerecktem Polypropylen, und einer Klebemasse auf Basis von Acrylatdispersion sind bekannt und werden von bekannten Herstellern von Verpackungsklebebändern angeboten.

Eine Beschreibung befindet sich beispielsweise in "Packaging Tapes", Stefan Roeber in Handbook of Pressure Sensitive Adhesive Technology, Third Edition, edited by Donatas Satas, Satas&Associates, Warwick, Rhode Island pp. 787 - 814. Weitere Beschreibungen befinden sich in "European Adhesives & Sealants 10 (4), 1993, 29 von G. Pedala" und "European Adhesives & Sealants 2 (2), 1985, 18 von R.W. Andrew".

Die bekannten Verpackungsklebebänder mit einer Folie auf Basis von biaxial gerecktem Polypropylen und einer Klebemasse auf Basis von Acrylatdispersion werden für viele Verpackungsaufgaben, insbesondere beim Verschließen von Kartons eingesetzt. Im Vergleich zu handelsüblichen Klebebändern mit Klebemasse auf Basis lösemittelhaltiger Naturkautschukklebemassen, die mit geeigneten Harzen abgemischt werden, weisen die Klebebänder mit Klebemasse auf Basis Acrylatdispersion den Nachteil auf, daß oftmals ein nicht zufriedenstellendes Verschlußergebnis erzielt wird. Dies bedeutet, daß sich die verschlossenen Kartons nach wenigen Minuten oder Stunden nach dem Verschließen wieder öffnen. Üblicherweise tritt dieses ungewollte Öffnen nicht für alle verschlossenen Kartons sondern nur für einen kleineren Teil auf, der dann jedoch in den heute üblichen automatischen Förder- und Verpackungsstraßen zu Störungen und Nacharbeit führt. Das Problem tritt verstärkt auf, wenn Kartons verwendet werden, die aus recycliertem Papier hergestellt wurden. Der Anteil von Kartons aus recycliertem Papier nimmt seit einigen Jahren ständig zu.

Ursache für das Versagen der Klebebänder auf Basis von Acrylatdispersionen ist das nicht ausreichende Anfaßvermögen der Klebemasse zu den Kartonoberflächen aus recycliertem Papier und die durch zu hohe Abrollkraft beim Verarbeiten in das Klebeband gebrachte Dehnung. Bei ausreichender Deckelklappenspannung der Kartons, verursacht durch den Fülldruck des verpackten Materials im Karton oder durch die dem Verschließen entgegenwirkende Spannung des Verpackungsmaterials, löst sich das Klebeband von der Kartonoberfläche und der Karton öffnet sich.

Eine bekannte Maßnahme zur Verbesserung des Tacks ist die Zugabe von Harzen zu Acrylatdispersionen. Die Harze können als wäßrige Harzdispersion zugegeben werden.

Eine Übersicht über mögliche Harzdispersionen findet sich beispielsweise in "Resin Dispersions", Anne Z. Casey in Handbook of Pressure Sensitive Adhesive Technology, Second Edition, edited by Donatas Satas, Van Nostrand Reinhold New York, pp. 545 - 566. Ergebnisse von der Abmischung von Acrylatdispersionen mit Harzdispersionen werden in "Modification of Acrylic Dispersions", Alexander Zettl in Handbook of Pressure Sensitive Adhesive Technology, Second Edition, edited by Donatas Satas, Van Nostrand Reinhold New York, pp. 457 - 493, beschrieben.

Von der Firma Hercules BV wird eine Mischung aus Acrylatdispersionen (Acronal 85D, BASF), 33 Gew.-% Harzdispersionen auf Basis eines Kohlenwasserstoffharzes (Tacolyn 4177) und ca. 4 Gew.-% (2 % bezogen auf die Mischung der wäßrigen Dispersionen) von einem isocyanathaltigen Vernetzer (Basonat F DS 3425X, BASF) vorgeschlagen ("Tacolyn 4177 and Tacolyn 153 Resin Dispersions, use in WBPSA technical tapes for high temperature application"; Produktinformation Hercules BV vom 06.01.1995, Seite 1 - 4).

Hierdurch wird eine verbesserte Wärmestandsfestigkeit, verbesserte Kohäsion und verbesserter Tack zu Stahl erzielt. Die Verankerung der Masse auf einer Folie aus biaxial gerecktem Polypropylen ist jedoch nicht ausreichend. Ein ausreichend leises und leichtes Abrollen kann zudem durch die vorgeschlagenen Klebemassen nicht erzielt werden und die Verwendung des isocyanathaltigen Vernetzers führt zu erhöhtem Aufwand zur Arbeitssicherheit, da Basonat F DS 3425X als Gefahrstoff gemäß Gefahrstoffverordnung eingestuft ist und Sensibilisierung durch Einatmen oder Hautkontakt sowie Gesundheitsschädigung beim Einatmen möglich ist (Sicherheitsdatenblatt Basonat F DS 3425 gemäß 91/155/EWG vom 20.07.1994, BASF. Die vorgeschlagene Maßnahme ist damit nicht geeignet, Klebebänder mit verbessertem Anfaßvermögen zu recycliertem Papier bei gleichzeitig leisem und leichten Abrollen sowie ausreichender Masseverankerung zu erzielen.

Eine weitere Möglichkeit, das Anfaßvermögen zu Kartonagen aus recycliertem Papier zu verbessern, ist in DE 196 11 501 A1 und EP 0 796 906 A2 beschrieben. Hier wird eine Klebemasse auf Basis einer Mischung von Acrylatdispersion, speziellen Harzdispersionen auf Basis von Kohlenwasserstoffharzen, alkoxylierten Alkylphenolen und optional eines geeigneten Vernetzers verwendet.
Für die Herstellung der Acrylatdispersionen werden anionische, nichtionische und weniger oft kationische oder amphotere Komponenten als Emulgatoren eingesetzt. Anionische Emulgatoren enthalten Natrium-, Kalium- oder Ammoniumsalze von Fettsäuren und Sulfonsäuren, Alkalisalze von C 12-16 Alkylsulfaten, ethoxilierte und sulfonierte Fettalkohole oder Alkylphenole.
Die Emulgatoren werden häufig in Konzentrationen von 0,2 - 5 % bezogen auf die Acrylatmonomeren eingesetzt.
Bedingt durch Emulgatoren aber auch durch zusätzlich zugesetzte Benetzungsagenzien weisen die getrockneten Acrylatdispersionsfilme eine mehr oder weniger ausgeprägte Wasserempfindlichkeit auf.
Die Wasserempfindlichkeit wird häufig durch die Zeit einer Weißfärbung nach Benetzung von Wasser mit der getrockneten Selbstklebemasse bestimmt. Der Weißungsgrad spielt bei bestimmten Etikettenanwendungen, wo auf Optik großen Wert gelegt wird, eine gewisse Rolle. Bei Verpackungsklebebändern ist er aber nur von geringer Bedeutung.
Viel gravierender kann die Wasserempfindlichkeit bzw. Feuchtenempfindlichkeit bei Klebebändern mit Acrylatdispersionen aber sein, die aus beidseitig physikalisch (Corona - Flammbehandlung) behandeltem sein, wenn diese Klebebänder bei hoher Luftfeuchte dazu neigen, daß die Klebemasse beim Abwickeln von der Rolle zum Umspulen auf die andere Seite führt. Polypropylenklebebänder, die beidseitig eine Oberflächenbehandlung erhalten haben, werden unter anderem von G. Pedela in " European Adhesives & Sealents" 10 (4), 1993,29 beschrieben. Beidseitig oberflächenbehandelte PP Klebebänder sind als sogenannte low noise Verpackungsklebebänder auf dem Markt. Eine Beschreibung befindet sich beispielsweise im "Handbook of Pressure Sensitive Adhesive Technology" von Donatas Satas, Third Edition, 32, pp 797.
Häufig wird aber auch erst die Klebebandrückseite einer Coronabehandlung in einer Druckmaschine ausgesetzt, um PP-Klebebänder mit Flexodruckfarben zu versehen. Geeignete Flexodruckfarben sind zum Beispiel die Farben der Serie "15 PAA" von Fa. Michael Huber GmbH in D 85551 Kirchheim- Heimstetten.

Um reduzierte Wasserempfindlichkeit vorliegen zu haben, werden in der Literatur Verfahren aufgeführt, die bereits bei der Dispersionsherstellung bei der Auswahl der Emulgatoren ansetzen. So gibt es Emulgatoren, die bei höheren Temperaturen ausreichend flüchtig sind oder sich bei der Trocknung zersetzen. So werden in US 2,680,111 von United States Rubber Co. Ammoniumseifen aufgeführt, die bei der synthetischen Gummipolymerisation eingesetzt werden, um die Wasserbeständigkeit von Gummibeschichtungen zu verbessern.

US 3,847,855 von Union Carbide Corp. empfiehlt Vinylchloridcopolymer-emulsionen, die Ammoniumsalze vom Fettsäuren enthalten. Da das Migrieren von Emulgatoren für die Wasserempfindlichkeit häufig verantwortlich gemacht wird, sind in der Literatur Hinweise zu finden, die einpolymerisierbare Emulgatoren zur Verminderung der Migration einsetzen.

Durch Auswahl bestimmter Comonomere bei der Acrylatpolymerisation kann die Wasserbeständigkeit auch erhöht werden, so wird zum Beispiel Ethylenglykoldimethyl-acrylat als Comonomer von T. Ono in US 3,983,297 vorgeschlagen, um die Wasserbeständigkeit zu verbessern.

Die bekannten Klebebänder rollen bei der Verwendung in der Praxis, d.h. bei Abrollgeschwindigkeiten zwischen 20 und 200 m/min relativ laut ab und führen zu einer Verschlechterung der Arbeitsbedingungen durch Lärmerhöhung.

Der Erfindung liegt die Aufgabe zugrunde, ein Klebeband der eingangs erwähnten Art so auszubilden, daß eine deutlich verbesserte Wasserempfindlichkeit und gleichzeitig ein leises Abrollen bei hohen Abrollgeschwindigkeiten erzielt wird.

Diese Aufgabe wird erfindungsgemäß gelöst durch ein lösungsmittelfreies Klebeband mit einer vorzugsweise gereckten Folie auf der Basis von Polyolefinen und einer Klebschicht, die zwischen 10 und 45 g/m² aufgetragen und hergestellt ist mit einer Mischung aus einer klebenden ersten Acrylatdispersion und einer speziellen zweiten Acrylatdispersion und mit 0 bis 50 Gew.-% von die Klebeeigenschaften der durch die Acrylatdispersionen gebildeten Klebemasse nicht veränderten Zusätzen, wobei das Mengenverhältnis der ersten Acrylatdispersion zu der zweiten Acrylatdispersion zwischen 99:1 und 90:10 beträgt und die zweite Acrylatdispersion aus folgenden Komponenten besteht:
65 - 84 Gew.-% Ethylacrylat-Einheiten
15 - 34 Gew.-% Methylmethacrylat-Einheiten
0,5 - 2 Gew.-% Acrylsäure-Einheiten
0,1 - 1 Gew.-% Propylenimin-Einheiten

Für das erfindungsgemäße Klebeband wurde somit ein neuer Weg gefunden, eine bereits bestehende handelsübliche Acrylathaftklebedispersion durch Zugabe an sich bekannter Rohstoffe so zu verändern, daß das Klebeband als Verpackungsklebeband für handelsübliche Kartonagen aufgrund eines verbesserten Anfaßvermögens geeignet ist und eine deutlich verbesserte Wasserempfindlichkeit bei einem gleichzeitigen leisen Abrollen bei hohen Abrollgeschwindigkeiten gewährleistet.

Das erfindungsgemäße Klebeband kann ferner bedruckt werden, ohne daß eine weitere Oberflächenbehandlung, beispielsweise mittels Koronaentladung, beim Druckprozeß notwendig ist. Die Verwendung von Folien auf Basis von Polyolefinen, vorzugsweise gereckten Polyolefinen, ist lange bekannt und gehört zum Stand der Technik.

Monoaxial und biaxial gereckte Folien auf Basis von Polypropylen werden in großen Mengen für Verpackungsklebebänder, Strapping-Tapes und andere Klebebänder eingesetzt. Auch Folien auf Basis von gerecktem Polyethylen oder gereckten Copolymeren enthaltend Ethylen- und/oder Propyleneinheiten sind bekannt. Auch Mischungen der verschiedenen Polymere können zum Herstellen der Folien verwendet werden.

Besonders bevorzugt zur Herstellung der erfindungsgemäßen Klebebänder sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5. Die erzielten Elastizitätsmodule in Längsrichtung, gemessen bei 10 % Dehnung nach ASTM D882, liegen üblicherweise zwischen 1000 und 4000 N/mm². Die erzielten Elastizitätsmodule in Querrichtung liegen ebenfalls zwischen 1000 und 4000 N/mm².

Die Dicken der biaxial gereckten Folien liegen insbesondere zwischen 15 und 100 µm, vorzugsweise zwischen 20 und 50 µm.

Die biaxial gereckten Folien können mittels üblicher Flachfolienanlagen hergestellt werden, bei der üblicherweise zuerst die Reckung in Längsrichtung und danach die Reckung in Querrichtung ausgeführt wird. Mit diesem Prozeß können in Längs- und Querrichtung unterschiedliche Eigenschaften eingestellt werden. Die Reckverhältnisse in Längsrichtung liegen insbesondere zwischen 1:4,5 und 1:6 (bevorzugt 1:4,8 bis 1:5,6) und in Querrichtung zwischen 1:7 und 1:9. Beispielhaft seien biaxial gereckte Folien der Firma Radici (Italien) mit der Bezeichnung Radil T und der Firma Mobil mit der Bezeichnung BICOR OPP FILM 35 MB 250 genannt. Grundsätzlich bekannt sind auch biaxial gereckte Folien, die zuerst in Längsrichtung, dann in Querrichtung und abschließend noch einmal in Längsrichtung gereckt werden.

Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedene Dicken und Zusammensetzungen sind bekannt.

Bevorzugt für die erfindungsgemäßen Klebebänder sind mehrschichtige, biaxial gereckte Folien auf Basis von Polypropylen, die einen ausreichend festen Verbund zwischen den Schichten aufweisen, da ein Delaminieren der Schichten während der Klebebandherstellung oder der Anwendung nachteilig sind.

Es können auch biaxial gereckte, mehrschichtige Polyolefinfolien auf Basis von Polypropylen verwendet werden, deren Oberflächen eine gegenüber üblichen Polypropylenfolien deutlich erkennbare Mattigkeit aufweisen. Beispielhaft seien biaxial gereckte Folien der Firma Radici (Italien) mit der Bezeichnung Radil TM und der Firma Polinas (Türkei) mit der Bezeichnung Pilen 225 D und der Fa. Hoechst mit der Bezeichnung Trespaphan Mat und der Fa. Bimo (Italien) Stilan HP 32 genannt. Dies wird dadurch erzeugt, daß spezielle Copolymere oder Polymermischungen auf Basis von Polyolefinen verwendet werden, die bei der Herstellung mittels Extrusion und speziell angepaßten Reckbedingungen zu ausreichend großer Oberflächenrauhigkeit und demzufolge einen matten Erscheinungsbild führen.

Die Oberflächen der Folien werden durch bekannte Verfahren behandelt. Bevorzugt sind Oberflächenbehandlungen durch Coronabehandlung und/oder durch Flammenvorbehandlung. Eine Übersicht über die Verfahren zur Oberflächenbehandlung enthält beispielsweise der Artikel "Surface pretreatment of plastics for adhesive bonding" (A. Kruse, G. Krüger, A. Baalmann, and O.-D. Hennemann, J. Adhesion Sci. Technol., Vol. 9, No. 12, pp. 1611-1621 (1995).

Die biaxial gereckten Folien für die erfindungsgemäßen Klebebänder werden vorzugsweise auf der der Masse zugewandten Seite mittels corona- und/oder Flammenvorbehandlung vorbehandelt, um so eine ausreichende Verankerung der Klebemasse auf der Folie zu erzielen. Die hierbei erzielten Oberflächenspannungen liegen insbesondere zwischen 35 und 47 mN/m und vorzugsweise zwischen 38 und 45 mN/m.

Die Oberflächenbehandlung der nicht beschichteten Seite kann vor der Beschichtung, direkt nach der Beschichtung oder auch in einem getrennten Arbeitsschritt, beispielsweise beim Schneiden und Umwickeln, erfolgen. Die Oberflächenbehandlung der nicht beschichteten Seite erfolgt vorzugsweise nach der Beschichtung. Bevorzugt ist eine Coronavorbehandlung mit der eine Oberflächenspannung, gemessen mit handelsüblichen Prüftinten, von 30 bis 45 mN/m, bevorzugt von 35 bis 40 mN/m und besonders bevorzugt von 36 bis 38 mN/m erzielt wird. Ebenso ist eine Oberflächenbehandlung mittels Flammenbehandlung möglich.
Der Schichtauftrag der Klebeschicht beträgt 10 bis 45 g/m². In einer bevorzugten Ausführung wird ein Schichtauftrag von 18 bis 35 g/m², besonders bevorzugt 18 - 28 g/m² eingestellt.

Acrylatdispersionen (b.1) sind bekannt und werden sowohl für Klebemassen von Klebebändern als auch für Klebemassen von Etiketten in großen Mengen eingesetzt. Die Acrylatdispersionen enthalten Partikel aus Acrylatpolymeren, die dispers in der wäßrigen Phase der Dispersion verteilt sind. Die Herstellung von Acrylatdispersionen erfolgt üblicherweise in wäßrigem Medium durch Polymerisation geeigneter Monomere. Die Herstellung kann sowohl mittels Batchprozeß als auch durch Zudosierung einer oder mehrerer Komponenten während der Polymerisation erfolgen. Beim Batchprozeß werden alle benötigten Komponenten gleichzeitig vorgelegt.

Die Eigenschaften der Acrylatdispersionen und der entsprechenden Klebemassen wird überwiegend durch die Auswahl der Monomere und das erzielte Molekulargewicht bestimmt. Die wichtigsten Monomere sind n-Butylacrylat, 2-Ethylhexylacrylat und Acrylsäure. Geeignete Monomerbausteine sind beschrieben in "Acrylic Adhesives", Donatas Satas in Handbook of Pressure Sensitive Adhesive Technology, Second Edition, edited by Donatas Satas, Van Nostrand Reinhold New York, pp. 396-456.

Die erfindungsgemäßen Acrylatdispersionen enthalten insbesondere
0 bis 10 % Acrylsäure-Einheiten
0 bis 100 % n-Butylacrylat-Einheiten
0 bis 100 % 2-Ethylhexylacrylat-Einheiten

In einer bevorzugten Ausführung werden Acrylatdispersionen mit 0,5 bis 3 % Acrylsäure-Einheiten verwendet. In einer weiteren bevorzugten Ausführung werden Acrylatdispersionen mit 0,5 bis 3 % Acrylsäure-Einheiten und 99,5 bis 90 %, besonders bevorzugt 99,5 bis 96 %, n-Butylacrylat-Einheiten verwendet. Ein weiteres Beispiel für erfindungsgemäße Acrylatdispersionen sind Acrylatdispersionen mit 80-90 % 2-Ethylhexylacrylat-Einheiten und 8 bis 20 % n-Butylacrylat-Einheiten.

Die Acrylatdispersionen können zusätzlich weitere Monomer-Einheiten enthalten, durch die beispielsweise die Glasübergangstemperatur und die Vernetzbarkeit gesteuert werden kann. Beispiele sind Methylacrylat, Ethylacrylat, Methylethylacrylat, Maleinsäureanhydrid, Acrylamid, Glycidylmethacrylat, Isopropylacrylat, n-Propylacrylat, Isobutylacrylat, n-Octylacrylat sowie die entsprechenden Methacrylate dieser Acrylate. Die Acrylatdispersionen enthalten üblicherweise 0 - 10 % dieser zusätzlichen Monomereinheiten, entweder werden ausschließlich eine zusätzliche Monomereinheit oder Mischungen derselben verwendet.

Die erzielte Glasübergangstemperatur hängt von den eingesetzten Monomeren ab. Die für die erfindungsgemäßen Klebemassen verwendeten Acrylatdispersionen weisen im getrockneten Zustand Glasübergangstemperaturen insbesondere zwischen -80 und -15°C, bevorzugt zwischen -75 und -25°C und besonders bevorzugt zwischen -55 und -35°C auf.

Der Feststoffgehalt der Acrylatdispersionen liegt insbesondere zwischen 30 und 70 Gew.-%, bevorzugt zwischen 45 und 60 Gew.-%.
Beispielhaft seien die Acrylatdispersionen Primal PS 83d, Primal PS PS 90 der Fa. Rohm & Haas genannt.

Spezielle Acrylatdispersionen b.2 sind bekannt und werden unter anderem für Lederimprägnierungen eingesetzt. So setzt Fa. Henkel gemäß EP 17119 solche Acrylatdispersionen in selbstglänzenden Schuh- und Lederpflegemitteln ein.

Die speziellen Acrylatdispersionen enthalten Partikeln aus Acrylatpolymeren, die dispers in der wäßrigen Phase der Dispersion verteilt sind. Die Herstellung von Acrylatdispersionen erfolgt üblicherweise in wäßrigem Medium durch Polymerisation geeigneter Monomere. Die Herstellung kann sowohl mittels Batchprozeß als auch durch Zudosierung einer oder mehrerer Komponenten während der Polymerisation erfolgen. Beim Batchprozeß werden alle benötigten Komponenten gleichzeitig vorgelegt.
Die Eigenschaften der Acrylatdispersionen und der entsprechenden Klebemassen wird überwiegend durch die Auswahl der Monomere und das erzielte Molekulargewicht bestimmt.
Die wichtigsten Monomere sind n-Butylacrylat, Ethylacrylat, Methylmethacrylat und Acrylsäure. Weitere Monomere, die für die Verwendung von nicht klebenden Acrylatdispersionen geeignet sind, werden vorzugsweise als wahlweise zusätzliche Monomere zusammen mit den Estern der Acrylsäure und / oder Methacrylsäure copolymerisiert. Beispiele sind Acrylamid, Glycidylmethacrylat, Hydroxyethylmethacrylat, Dimethylaminoethylmethacrylat, Vinylacetat, Styrol, Maleinsäureanhydrid. In EP 0375215 B1 von der Fa. ICI werden solche Dispersionen zum Beispiel beschrieben.

Falls erwünscht, kann die Dispersion weitere Zusätze enthalten, wie zum Beispiel Füllstoffe, oder Vernetzungsmittel. Geeignete Vernetzungsmittel können Epoxydharze, Aminderivate wie beispielsweise Hexamethoxymethylmelamin und/ oder Kondensationsprodukte von einem Amin, zum Beispiel Melamin, Harnstoff mit einem Aldehyd, zum Beispiel Formaldehyd sein. Um nicht klebende Polyacrylatdispersionen zu erhalten hat sich gezeigt, daß es günstig ist weitere Stoffe gegebenenfalls zuzugeben, die zum Beispiel mit den Carboxylgruppen des Polymers reagieren. Beispiele dafür sind Aziridine, wie Ethylenimin, Propylenimin.

Die erfindungsgemäße, von 3 Acrylatmonomeren abgeleitete spezielle Acrylatdispersion umfaßt:
65 - 84 Gew.-% Ethylacrylat-Einheiten
15 - 34 Gew.-% Methylmethacrylat-Einheiten
0,5 - 2 Gew.-% Acrylsäure-Einheiten
0,1 - 1 Gew.-% Propylenimin-Einheiten

Beispielhaft für eine spezielle Acrylatdispersion (b.2) sei Neo Cryl A 45 der Fa. Zeneca Resins (Holland) genannt.

Im Folgenden werden die typischen Eigenschaften der Neo Cryl A 45 Acrylatdispersion aufgeführt.

| Typ | anionische modifizierte Acrylatcopolymerdispersion |
|---|---|
| Festkörper | 37 % |
| PH (25° C) | 9,5 |
| Viskosität, Brookfield 25° C | 25mPa.s |
| Tg (DSC) | 15° C |

Die zur Herstellung der erfindungsgemäßen Klebebänder verwendeten Klebemassen können weitere Komponenten enthalten, wenn diese so gewählt werden, daß die erfindungsgemäßen Eigenschaften (insbesondere Anfaßvermögen und Wasserunempfindlichkeit) hierdurch nicht verschlechtert werden. Beispiele sind Harze, Weichmacher, Farbstoffe, Entschäumer und Verdickungsmittel sowie weitere Zuschlagstoffe zum Einstellen des gewünschten rheologischen Verhaltens. Modifikationen von Acrylatdispersionen sind bekannt und beispielsweise beschrieben in "Modification of Acrylic Dispersions", Alexander Zettl in Handbook of Pressure Sensitive Adhesive Technology, Second Edition edited by Donatas Satas, Van Nostrand Reinhold New York, pp. 457 -493.

Wäßrige Harzdispersionen, d.h. Dispersionen von Harz in Wasser, sind bekannt. Herstellung und Eigenschaften sind beispielsweise beschrieben in Resin Dispersions", Anne Z. Casey in Handbook of Pressure Sensitive Adhesive Technology, Second Edition, edited by Donatas Satas, Van Nostrand Reinhold New York, pp. 545 - 566.

Harzdispersionen von Kohlenwasserstoffharzen und modifizierten Kohlenwasserstoffharzen sind ebenfalls bekannt und werden beispielsweise von Firma Hercules BV unter dem Handelsnamen Tacolyn angeboten (Beispiel Tacolyn 4177).

Geeignet sind Harzdispersionen auf Basis von Kohlenwasserstoffharzen oder modifizierten Kohlenwasserstoffharzen mit einem Erweichungspunkt zwischen 50 und 100° C. Die Klebemasse kann beispielsweise 5 - 28 Gew.-% der Harzdispersionen enthalten. Der Feststoffgehalt der Harzdispersionen liegt üblicherweise zwischen 40 und 70 %.

Der erfindungsgemäßen Klebemasse können gemäß dem Stand der Technik Harzdispersionen auf Basis von Mischungen verschiedener Kohlenwasserstoffharze, sowie von Mischungen von Kohlenwasserstoffharzen mit anderen bekannten Harzen, zugegeben werden, wenn dadurch das charakteristische Eigenschaftsbild (insbesondere Anfaßvermögen und Wasserunempfindlichkeit) der erfindungsgemäßen Klebemasse nicht eigenschaftsschädigend verändert wird. Möglich sind beispielsweise Mischungen von Kohlenwasserstoffharzen mit geringen Mengen von Harzen auf Basis von Kolophonium oder modifiziertem Kolophonium oder Phenolharzen, anderen Naturharzen, Harzestern oder Harzsäuren.

Der erfindungsgemäßen Klebemasse können weiterhin weichmachende Komponenten wie Weichharze, Flüssigharze, Öle oder andere bekannte Komponenten wie beispielsweise alkoxylierte Alkylphenole zugegeben werden. Alkoxylierte Alkylphenole sind bekannt und beispielsweise beschrieben in US 4277387 und EP 6571. Die Verwendung von alkoxylierten Alkylphenolen als Weichmacher wurde u.a. vorgeschlagen in "Modification of Acrylic Dispersions", Alexander Zettl in Handbook of Pressure Sensitive Adhesive Technology, Second Edition, edited by Donatas Satas, Van Nostrand Reinhold New York, p. 471.

Die Eigenschaften der alkoxylierten Alkylphenole werden durch den Alkylrest und überwiegend durch den Aufbau der Polyglykoletherkette bestimmt. Bei der Herstellung kann sowohl Ethylenoxid als auch Propylenoxid verwendet werden. In einer besonderen Ausführung wird propoxyliertes Alkylphenol verwendet. Bevorzugt sind wasserunlösliche alkoxylierte Alkylphenole. Weiterhin bevorzugt sind alkoxylierte Alkylphenole mit einem Siedepunktpunkt größer 100°C, bevorzugt größer 130°C und besonders bevorzugt größer 200°C.

Die erfindungsgemäße Klebemasse kann durch Einsatz von Vernetzern in Richtung auf höhere Scherfestigkeit optimiert werden. Auswahl und Anteil der Vernetzer ist dem Fachmann bekannt und kann durch entsprechende Versuche festgelegt werden. Vernetzer für Acrylatdispersionen sind grundsätzlich bekannt und beispielsweise beschrieben in "Acrylic Adhesives", Donatas Satas in Handbook of Pressure Sensitive Adhesive Technology, Second Edition, edited by Donatas Satas, Van Nostrand Reinhold New York, pp. 411 - 419.

Vernetzer auf Basis von Isocyanat sind grundsätzlich geeignet, aber wegen der begrenzten Topfzeiten und des erhöhten Aufwands bezüglich Arbeitssicherheit nicht bevorzugt. Ein Beispiel für Vernetzer auf Basis von Isocyanat ist Basonat F DS 3425 X (BASF).

Bevorzugt sind isocyanatfreie Vernetzer, beispielsweise Vernetzer auf Basis von Salzen mehrfunktioneller Metalle. Diese sind grundsätzlich bekannt und werden beispielsweise in US Patent 3,740,366 (1973), US Patent 3,900,610 (1975), US Patent 3,770, 780 (1973) und US Patent 3,790,553 (1974) beschrieben. Besonders geeignet sind Vernetzer auf Basis von Zinkkomplexen, die mit Carboxylgruppen kovalente und/oder komplexartige Bindungen ausbilden können.

Die Herstellung der Klebebänder kann nach bekannten Verfahren erfolgen. Eine Übersicht über übliche Herstellverfahren findet sich beispielsweise in "Coating Equipment", Donatas Satas in Handbook of Pressure Sensitive Adhesive Technology, Second Edition, edited by Donatas Satas, Van Nostrand Reinhold New York, pp. 767 - 808. Die bekannten Verfahren zum Trocknen und Schneiden der Klebebänder sind ebenfalls im Handbook of Pressure Sensitive Adhesives Technology Seite 809 - 874 zu finden.

Die Beschichtung der Folien mit Dispersionsklebemassen erfolgt bevorzugt mit Drahtrakelsystemen, die so eingestellt werden, daß der gewünschte Masseauftrag erzielt wird. Die nachfolgende Trocknung der beschichteten Folie erfolgt insbesondere im Trockenkanal, der mit Heißluft betrieben wird. Grundsätzlich ist auch eine zusätzliche Trocknung mittels Infrarotstrahlern möglich.

Die getrockneten Folien werden auf der Rückseite, die nicht mit Klebemasse beschichtet wurde, einer Oberflächenbehandlung bevorzugt mittels Coronaentladung unterzogen. Die Oberflächenbehandlung muß möglichst gleichmäßig erfolgen. Hierbei wird eine Oberflächenspannung, gemessen mit handelsüblichen Prüftinten, zwischen 30 und 45 mN/m, bevorzugt zwischen 35 und 40 mN/m und besonders bevorzugt zwischen 36 und 38 mN/m erzielt.

Die Klebebandrollen sind möglichst mit gleichmäßiger Spannung und gleichmäßigem Andruck aufzuwickeln. Die Optimierung des Wickelns ist abhängig von den verwendeten Geräten und dem Fachmann bekannt. Die Bedingungen beim Wickeln sind so einzustellen, daß ausreichend leises Abrollen der Klebebandrolle erreicht wird.

Die Herstellung der Klebemasse aus den Komponenten b.1., b.2 und ggf. weiteren Komponenten kann in einem getrennten Prozeß vor der Beschichtung oder auch mittels automatischer Mischer unmittelbar vor der Beschichtung erfolgen.

Die erfindungsgemäßen Klebebänder weisen gegenüber bekannten Klebebändern mit Polyolefinträger und Klebemasse auf Basis von Acrylatdispersion eine deutlich verbesserte Feuchtebeständigkeit bei gleichzeitig leisem Abrollen auch bei hohen Geschwindigkeiten von beispielsweise 120 m/min auf. Weiterhin weisen die erfindungsgemäßen Klebebänder gegenüber bekannten Klebebändern mit Polyolefinträger und Klebemasse auf Basis von Acrylatdispersion gute Klebkraft und gute Scherfestigkeit auf.

Durch diese o.g. Verbesserungen können die bekannten Schwächen der bekannten Klebebänder mit Polyolefinträger und Acrylatdispersion überwunden werden. Insbesondere können mit den erfindungsgemäßen Klebebändern deutlich bessere Ergebnisse beim Verschließen von Kartons erzielt werden.

Weiterhin können die erfindungsgemäßen Klebebänder mit handelsüblichen Druckfarben bedruckt werden, wobei gegenüber bekannten Klebebändern mit Polyolefinträger und Klebemasse auf Basis von Acrylatdispersion der wesentliche Vorteil besteht, daß die erfindungsgemäßen Klebebänder ohne zusätzliche Oberflächenaktivierung beim Bedrucken bedruckt werden können. Hierdurch wird der Druckprozeß deutlich vereinfacht.

Die in den Beispielen genannten Parameter wurden mit Hilfe nachstehender Meßverfahren bestimmt.

Die Bestimmung des Wassergehalts der Klebemasse erfolgt nach der bekannten Methode von Karl Fischer. Hierbei wird eine bekannte Menge der Klebemasse erwärmt und das hierbei ausgetriebene Wasser unter Verwendung des Karl Fischer Reagenzes mittels Titration bestimmt.

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Aceton entfernt und die nun klebemassefreie Folie erneut gewogen. Aus der Differenz wird der Masseauftrag in g/m² berechnet.

Die Messung der Abrollkraft erfolgt bei konstanter Abrollgeschwindigkeit von 30 m/min durch Messung des Drehmoments und Berechnung der Abrollkraft nach den bekannten Formeln in N/cm.

Die Bestimmung des Abrollgeräuschs erfolgt beim Abrollen des Klebebandes mit einer Abrollgeschwindigkeit von 60, 120 und 180 m/min. Gemessen wird das Abrollgeräusch in dB(A) im Abstand von 10cm vom Zentrum der Klebebandrolle mit einem handelsüblichen Lautstärkemeßgerät der Firma Brüel & Kjear (Type 2226). Eine gemessene Lautstärke kleiner als 84 dB(A) wird als "leise" charakterisiert.

Die Messung der Klebkraft auf Stahl erfolgt gemäß DIN EN 1939 und in Anlehnung an AFERA 4001.

Die Bestimmung der Feuchtebeständigkeit von Klebebändern erfolgt durch Lagerung fertiger Klebebandrollen in einem Klimaschrank der Fa. Weiss SB 11160/40 bei 20°C und 90 % relativer Feuchtigkeit. Nach definierter Lagerungzeit (3 Tage; 20 Tage) in diesem Klima werden die Klebebandrollen abgerollt. Rollen die dabei kein Klebemasseumspulen auf die Rückseite zeigen sind, werden als feuchtebeständig bezeichnet.

### Beispiele

### a. Folie

Es wird eine biaxial gereckte, matte Folie aus Polypropylen Radil TM der Firma Radici (Italien) verwendet:

| | |
|---|---|
| Dicke | 35µm; |
| Flächengewicht | 32 g/m² |
| Reißkraft längs | 150 N/mm² |
| Reißkraft quer | 270 N/mm² |
| Reißdehnung längs | 150 % |
| Reißdehnung quer | 50 % |

Die Oberflächenspannung der Folienoberfläche, die mit der Klebemasse beschichtet wird, beträgt 39 mN/m. Die gegenüberliegende Oberfläche der Folie, die nicht mit der Klebemasse beschichtet wird, wird nach der Beschichtung auch mittels Coronaverfahren behandelt, so daß eine Oberflächenspannung von 37 mN/m gemessen wird.

### b. Komponenten der Klebemasse

b.1: Acrylatpolymere aus wäßrige Acrylatdispersion der Firma Rohm and Haas mit der Bezeichnung Primal PS83D (Feststoffgehalt 53 Gew.-%; Ammoniakgehalt < 0,2 Gew.-%; pH-Wert 9,1 - 9,8)
b.2: spezielle Acrylatdispersion der Fa. Zeneca Resins mit der Bezeichnung Neo Cryl A 45

### c. Herstellung der Klebemasse

Die Herstellung der zu beschichtenden Klebemasse wurde wie folgt durchgeführt:
c.1. In die Acrylatdispersion b.1 wird bei 23°C das Neo Cryl A 45 (b.2) unter ständigem Rühren mit einem üblichen mechanischen Rührer zugegeben. Danach wird 10 min weiter gut gerührt.
c.2. In einem Zeitraum von 10 min bis 2h erfolgt die Beschichtung.

### d. Beschichtung

Die Beschichtung der Folie a. mit der Klebemasse erfolgt durch ein Drahtrakel. Das Drahtrakel und die Beschichtungsgeschwindigkeit werden so eingestellt, daß nach der Trocknung der beschichteten Folie ein Masseauftrag von ca. 24g/m² gemessen wird. Beschichtungsgeschwindigkeit und Trocknerleistung werden so eingestellt, daß nach der Trocknung in der Klebemasse ein Wassergehalt von 0,03 bis 0,13 Gew.-% gemessen wird.

Die Beschichtung erfolgte auf einer Laborbeschichtungsanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 105°C) betrieben wird. Nach der Beschichtung wurde die beschichtete Folie zu üblichen Klebebandrollen mit 50 mm Breite konfektioniert. Hierbei wird die nicht mit Klebemasse beschichtete Oberfläche der Folie mittels Coronaentladung behandelt, so daß danach mit handelsüblichen Prüftinten eine Oberflächenspannung von 37 mN/m gemessen wird. Die Bestimmung der Eigenschaften erfolgte nach dreitägiger Lagerung bei 23°C.

### e. Klebemasserezepturen

Folgende Klebemasserezepturen wurden verwendet. Die Angaben in Gew.-% beziehen sich für alle Komponenten auf den Feststoffgehalt.

| | | |
|---|---|---|
| Versuch A | 100 | Gew.-% Acrylatdispersion b.1 |
| | | |
| Versuch B | 95 | Gew.-% Acrylatdispersion (b.1) |
| | 5 | Gew.-% Neocryl A 45 (b.2) |

### f. Ergebnisse

| Eigenschaft | Versuch A nicht erfindungsgemäß | Versuch B erfindungsgemäß |
|---|---|---|
| Wassergehalt der Klebemasse [g/m²] | 0,05 | 0,09 |
| Klebemasseauftrag [g/m²] | 23,1 | 23,3 |
| Klebkraft auf Stahl [N/cm[ | 2,4 | 2,6 |
| Abrollkraft bei 30 m/min [N/mm] | 2,8 | 2,7 |
| Abrollgeräusch bei 60 m/min | leise | leise |
| Abrollgeräusch bei 120 m/min | laut | leise |
| Abrollgeräusch bei 180 m/min | laut | leise |
| Feuchtebeständigkeit nach 3d 20°C und 90 % relativer Luftfeuchte | 100 % Klebmasseumspulen | 0 % Klebmasseumspulen |
| Feuchtebeständigkeit nach 20d 20°C und 90 % relativer Luftfeuchte | 100 % Klebmasseumspulen | 0 % Klebmasseumspulen |

## Patentansprüche

1. Lösungsmittelfreies Klebeband mit einer Folie auf Basis von Polyolefinen und einer Klebschicht, die zwischen 10 und 45 g/m² aufgetragen und hergestellt ist mit einer Mischung aus einer klebenden ersten Acrylatdispersion und einer speziellen zweiten Acrylatdispersion und mit 0 - 30 Gew.-% Zusätzen, die die Klebeeigenschaften der durch die Acrylatdispersion gebildeten Klebemasse nicht verändern, wobei das Mengenverhältnis zwischen der ersten Acrylatdispersion und der zweiten Acrylatdispersion zwischen 99:1 und 90:10 liegt und die zweite Acrylatdispersion folgende Komponenten enthält:
65 - 84 Gew.-% Ethylacrylat-Einheiten
15 - 34 Gew.-% Methylmethacrylat-Einheiten
0,5 - 2 Gew.-% Acrylsäure-Einheiten
0,1 - 1 Gew.-% Propylenimin-Einheiten

2. Klebeband nach Anspruch 1, **dadurch gekennzeichnet, daß** der Schichtauftrag der Klebeschicht 18 bis 35 g/m² beträgt.

3. Klebeband nach Anspruch 1 oder 2, **dadurch gekennzeichnet, daß** die Folie aus biaxial gerecktem Polyolefin auf Basis von Polypropylen besteht.

4. Klebeband nach Anspruch 3, **gekennzeichnet durch** eine Foliendicke der Folie zwischen 20 und 100 µm.

5. Klebeband nach einem der Ansprüche 1 bis 4, **dadurch gekennzeichnet, daß** die Folie aus biaxial gereckten mehrschichtigen Polyolefinfolien auf Basis von Polypropylen gebildet ist, deren Oberfläche eine deutlich erkennbare Mattigkeit aufweisen.

6. Klebeband nach Anspruch 5, **gekennzeichnet durch** eine Foliendicke zwischen 15 und 50 µm.

7. Verwendung des Klebebandes nach einem der Ansprüche 1 bis 6 als Verpackungsklebeband.

8. Verwendung des Klebebandes nach einem der Ansprüche 1 bis 6 zur Herstellung eines bedruckten Klebebandes mittels einfacher Bedruckung ohne zusätzlicher Oberflächenaktivierung.

## Claims

1. Solvent-free adhesive tape with a film based on polyolefins and an adhesive layer which is applied at between 10 and 45 g/m² and is prepared with a mixture of a first, adhesive acrylic dispersion and a second, special acrylic dispersion and with 0-30% by weight of additives which do not alter the adhesive properties of the adhesive formed by the acrylic dispersion, the quantitative ratio between the first acrylic dispersion and the second acrylic dispersion being between 99:1 and 90:10 and the second acrylic dispersion comprising the following components:
65 - 84% by weight of ethyl acrylate units
15 - 34% by weight of methyl methacrylate units
0.5 - 2% by weight of acrylic acid units
0.1 - 1% by weight of propyleneimine units.

2. Tape according to Claim 1, **characterized in that** the application rate of the adhesive layer is from 18 to 35 g/m².

3. Tape according to Claim 1 or 2, **characterized in that** the film is composed of biaxially oriented polyolefin based on polypropylene.

4. Tape according to Claim 3, **characterized in that** said film has a thickness of between 20 and 100 µm.

5. Tape according to any of Claims 1 to 4, **characterized in that** the film is formed of biaxially oriented, multilayer polyolefin films based on polypropylene whose surface has a markedly perceptible mattness.

6. Tape according to Claim 5, **characterized in that** said film has a thickness of between 15 and 50 µm.

7. Use of the tape according to any of Claims 1 to 6 as an adhesive packaging tape.

8. Use of the tape according to any of Claims 1 to 6 for producing a printed adhesive tape by means of simple printing without additional surface activation.

## Revendications

1. Bande adhésive exempte de solvant, présentant une feuille à base de polyoléfines et une couche adhésive qui est appliquée entre 10 et 45 g/m² et réalisée avec un mélange constitué par une première dispersion adhésive d'acrylate et une deuxième dispersion spéciale et avec 0 - 30% en poids d'additifs qui ne modifient pas les propriétés adhésives de la masse adhésive formée par la dispersion d'acrylate, le rapport de mélange entre la première et la deuxième dispersion d'acrylate étant compris entre 99:1 et 90:10 et la deuxième dispersion d'acrylate contenant les composants suivants :
65 à 84% en poids d'unités acrylate
15 à 34% en poids d'unités méthacrylate de méthyle
0,5 à 2% en poids d'unités acide acrylate
0,1 à 1% en poids d'unités propylèneimine.

2. Bande adhésive selon la revendication 1, **caractérisée en ce que** la couche adhésive est appliquée à raison de 18 à 35 g/m².

3. Bande adhésive selon la revendication 1 ou 2, **caractérisée en ce que** la feuille est constituée par une polyoléfine étirée biaxialement à base de polypropylène.

4. Bande adhésive selon la revendication 3, **caractérisée par** une épaisseur de feuille entre 20 et 100 µm.

5. Bande adhésive selon l'une quelconque des revendications 1 à 4, **caractérisée en ce que** la feuille est formée à partir de feuilles à plusieurs couches de polyoléfines étirées biaxialement à base de polypropylène dont la surface présente une matité nettement décelable.

6. Bande adhésive selon la revendication 5, **caractérisée par** une épaisseur de feuille entre 15 et 50 µm.

7. Utilisation de la bande adhésive selon l'une quelconque des revendications 1 à 6 comme bande adhésive d'emballage.

8. Utilisation de la bande adhésive selon l'une quelconque des revendications 1 à 6 pour la réalisation d'une bande adhésive imprimée au moyen d'une simple impression, sans activation supplémentaire de la surface.
